# EUROPEAN PATENT APPLICATION

(11) **EP 3 413 210 A1**
(43) Date of publication of application: **12.12.2018**
(21) Application number: 16889250.3
(22) Date of filing: 03.02.2016
(51) Int. Cl.: G06F 17/30

(54) **INFORMATION SEARCH METHOD, INFORMATION SEARCH DEVICE AND INFORMATION SEARCH SYSTEM**

(71) Applicant: Hitachi, Ltd., Tokyo 100-8280 (JP)
(72) Inventor: YOKOHARI Takashi, Tokyo 100-8280 (JP)
(74) Representative: MERH-IP Matias Erny Reichl Hoffmann Patentanwälte PartG mbB
(86) International application number: PCT/JP2016/053139
(87) International publication number: WO 2017/134760

(57) **Abstract**

Provided are an information search method, an information search device, and an information search system, which enable a searcher (user) to easily understand an influence degree of the presence or absence of a search keyword input from the searcher (user) on a search result. An information search device 1 includes a keyword input receiving unit 21 that receives an input of a plurality of search keywords, a search executing unit 22 that extracts a plurality of documents from a document database 25 that stores a plurality of documents including document data and/or image data as a search result on the basis of the plurality of received search keywords, a search keyword influence degree calculating unit 23 that obtains an influence degree of the presence or absence of the received search keywords on the search result for each search keyword, and a display unit 3 that displays the influence degree of each search keyword on a screen together with the search result.

## Description

### Technical Field

The present invention relates to an information search method and an information search device in a field of information processing in which a plurality of search keywords are input on a computer to search a document or the like, and more particularly, an information search method, an information search device, and an information search system, which are capable of evaluating influence of the presence or absence of an input search keyword on a search result for each search keyword, suggesting the validity of the search keyword to a searcher (user), and performing research of a document or the like on the basis of an appropriate search keyword.

### Background Art

In a document search intended for information collection or the like, a search is repeatedly performed while changing a search keyword until useful information is found, but in a case in which an appropriate search keyword is unable to be set, it is likely to take a lot of time to acquire information, or it is likely to fail to acquire information. As a general search procedure, a search keyword is input to a search tool, and a search result is displayed, and if an appropriate document is not found among top 20 results, the search keyword is changed, and the search is often performed again, but if an appropriate search keyword is input from the beginning, business efficiency is improved. On the other hand, an inappropriate search keyword which causes noise to be mixed in search results should be changed to an appropriate search keyword.

For example, techniques described in PTL 1 or PTL 2 are known as a technique for efficiently obtaining useful information in a document search process or the like.

A web search device that decides an importance degree of each search keyword in accordance with its appearance order, multiplies manipulation (action) content on a preset web page by a corresponding addition point, generates a list in a descending order of evaluation points, and transmits a list of search results to a user terminal via a network is disclosed in PTL 1.

A configuration that allocates an importance degree to each search keyword in advance for a search keyword group input via a search query, sets a contribution degree on the basis of a similarity degree of each search keyword to a word in a document of a search result, and displays the contribution degree on a screen together with the search result is disclosed in PTL 2.

### Citation List

### Patent Literature

PTL 1: JP 2014-75064 A
PTL 2: JP 2007-219722 A

### Summary of Invention

### Technical Problem

However, in the technique disclosed in PTL 1, a display order for displaying search results according to a search keyword in a list form in accordance with the appearance order and the manipulation on the web page is merely decided, and the searcher (user) is unable to directly recognize influence of the presence or absence of the search keyword on the search result such as "this document was searched for since this search keyword was included. If this search keyword were not included, this document would not be searched for by other search keywords".

Further, in the technique disclosed in PTL 2, the contribution degree setting is automatically performed on a system side, and the user can revise the contribution degree after the search result is displayed, but the searcher (user) is unable to directly recognize influence of the presence or absence of the search keyword on the search result such as "this document was searched for since this search keyword was included. If this search keyword were not included, this document would not be searched for by other search keywords".

In this regard, the present invention provides an information search method, an information search device, and an information search system, which enable the searcher (user) to easily understand an influence degree of the presence or absence of the search keyword input from the searcher (user) on the search result.

### Solution to Problem

To solve the above problem, an information search device according to the present invention includes: a keyword input receiving unit that receives an input of a plurality of search keywords; a search executing unit that extracts a plurality of documents from a document database that stores a plurality of documents including document data and/or image data as a search result on the basis of the plurality of received search keywords; a search keyword influence degree calculating unit that obtains an influence degree of the presence or absence of the received search keywords on the search result for each search keyword; and a display unit that displays the influence degree of each search keyword on a screen together with the search result.

Further, an information search method of the present invention includes a keyword input reception process of receiving an input of a plurality of search keywords, a search process of extracting a plurality of documents from a document database that stores a plurality of documents including document data and/or image data as a search result on the basis of the plurality of received search keywords, a search keyword influence degree calculation process of obtaining an influence degree of the presence or absence of the received search keywords on the search result for each search keyword, and a display process of displaying the influence degree of each search keyword on a screen of a display unit together with the search result.

Further, an information search system of the present invention includes an information search device that is connected with a plurality of user terminal devices via a network, wherein the information search device includes a keyword input receiving unit that receives a plurality of search keywords input from the user terminal device via the network, a search executing unit that extracts a plurality of documents from a document database that stores a plurality of documents including document data and/or image data as a search result on the basis of the plurality of received search keywords, and a search keyword influence degree calculating unit that obtains an influence degree of the presence or absence of the received search keywords on the search result for each search keyword, and the influence degree of each search keyword is transmitted to the user terminal device via the network together with the search result.

### Advantageous Effects of Invention

According to the present invention, it is possible to provide an information search method, an information search device, and an information search system, which enable the searcher (user) to easily understand an influence degree of the presence or absence of the search keyword input from the searcher (user) on the search result.

Problems, configurations, and effects which are not described above will be apparent from description of the following embodiments.

### Brief Description of Drawings

[FIG. 1] FIG. 1 is an external appearance diagram and a functional block diagram of an information search device of a first embodiment according to one embodiment of the present invention.
[FIG. 2] FIG. 2 is an explanatory diagram of a data structure stored in a storage unit illustrated in FIG. 1.
[FIG. 3] FIG. 3 is a schematic process flow diagram of an information search device illustrated in FIG. 1.
[FIG. 4] FIG. 4 is a process flow diagram for calculating an influence degree of a search keyword through an information search unit illustrated in FIG. 1.
[FIG. 5] FIG. 5 is a diagram illustrating a display screen example of a display unit illustrated in FIG. 1.
[FIG. 6] FIG. 6 is an external appearance diagram and a functional block diagram of an information search device of a second embodiment according to another embodiment of the present invention.
[FIG. 7] FIG. 7 is an explanatory diagram of a data structure stored in a storage unit illustrated in FIG. 6.
[FIG. 8] FIG. 8 is a process flow diagram for calculating a contribution degree of a search keyword through an information search unit illustrated in FIG. 6.
[FIG. 9] FIG. 9 illustrates a display screen example of a display unit illustrated in FIG. 6, that is, an example of an input screen of usefulness of a search result.
[FIG. 10] FIG. 10 illustrates a display screen example of a display unit illustrated in FIG. 6, that is, a screen example of displaying a contribution degree of a search keyword.
[FIG. 11] FIG. 11 is a process flow diagram for calculating a contribution degree of a search keyword through an information search device of a third embodiment according to another embodiment of the present invention.
[FIG. 12] FIG. 12 illustrates a display screen example of a display unit of the third embodiment.
[FIG. 13] FIG. 13 illustrates another display screen example of the display unit of the third embodiment.
[FIG. 14] FIG. 14 is an external appearance diagram and a functional block diagram of an information search device of a fourth embodiment according to another embodiment of the present invention.
[FIG. 15] FIG. 15 is a process flow diagram for editing a search keyword through an information search unit illustrated in FIG. 14.
[FIG. 16] FIG. 16 illustrates a display screen example of a display unit illustrated in FIG. 14, that is, an example of an input screen for selecting a related word category.
[FIG. 17] FIG. 17 is a process flow diagram for constructing a related word database illustrated in FIG. 14.
[FIG. 18] FIG. 18 is an explanatory diagram of a data structure of the related word database illustrated in FIG. 14.
[FIG. 19] FIG. 19 illustrates a display screen example of a display unit illustrated in FIG. 14, that is, a screen example for editing a search keyword.
[FIG. 20] FIG. 20 is an overall schematic configuration diagram of an information search system of fifth embodiment in accordance with another embodiment of the present invention.
[FIG. 21] FIG. 21 is a functional block diagram of the information search device illustrated in FIG. 20.

### Description of Embodiments

In this specification, examples of "information" which is a search target includes document data, a website, CAD data, a still image captured by a camera, and a moving image captured by a moving image camera. For example, in the case of a still image, a distance (distance measurement data) measured by four or more satellites and position information at which image data is acquired are added to image data which is captured by a camera with a GPS device or the like and stored in a memory in a jpg format or the like. Generally, when a pointer or a cursor of a mouse is positioned and right-clicked, a property of image data (including thumbnail display, icon display, or the like) in a folder displayed on a screen is displayed, and description of the image data or the like input in a text form is displayed. In other words, in various kinds of data described above, for example, even when the data is image data, text data is commonly added to the image data, and it is possible to search for various kinds of data using a search keyword.

Further, in this specification, "information" including various kinds of data described above is also referred to collectively as a "document".

Hereinafter, embodiments of the present invention will be described with reference to the appended drawings.

### First embodiment

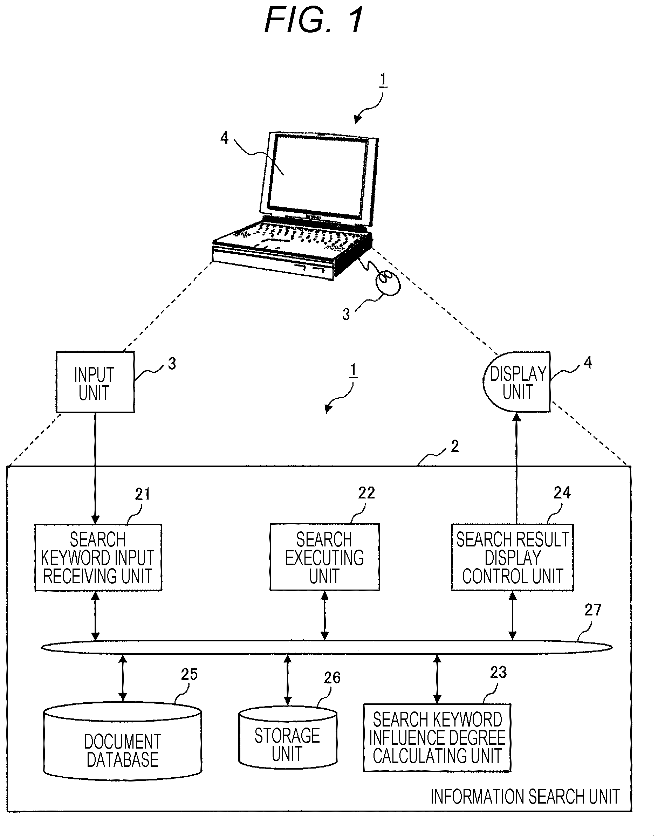

FIG. 1 is an external appearance diagram and a functional block diagram of an information search device of a first embodiment according to one embodiment of the present invention. As illustrated in FIG. 1, an information search device 1 includes an input unit 3 such as a keyboard or a mouse, a display unit 4 such as an LCD or an organic EL display, and an information search unit 2. The information search unit 2 includes a search keyword input receiving unit 21 that receives a search keyword input by a searcher (user) via the input unit 3, a document database 25 that stores documents such as document data or image data as described above, a search executing unit 22 that searches for documents stored in the document database 25, for example, through a known search engine on the basis of an input search keyword, a search keyword influence degree calculating unit 23 that obtains an influence degree of an input search keyword on a search result obtained by the search executing unit 22, a storage unit 26 that stores the influence degree obtained by the search keyword influence degree calculating unit 23 in association with each keyword together with an influenced document, and a search result display control unit 24 that performs control such that at least a search result or the like is displayed on a display screen of the display unit 4. In the present embodiment, a configuration in which the document database 25 is installed in the information search unit 2 of the information search device 1 will be described as an example, but the present invention is not limited thereto. For example, a configuration in which the document database 25 is connected to the information search device 1 as an external storage device may be provided.

The search keyword input receiving unit 21, the search executing unit 22, the search keyword influence degree calculating unit 23, the search result display control unit 24, the storage unit 26, and the document database 25 are accessibly connected with one another via an internal bus 27. Here, for example, the search executing unit 22, the search keyword influence degree calculating unit 23, and the search result display control unit 24 are implemented by a storage device such as a ROM that stores various kinds of programs (not illustrated), a RAM that temporarily stores data of a calculation process or a processing process, and a processor such as a CPU. The processor reads various kinds of programs stored in the ROM and executes a read program.

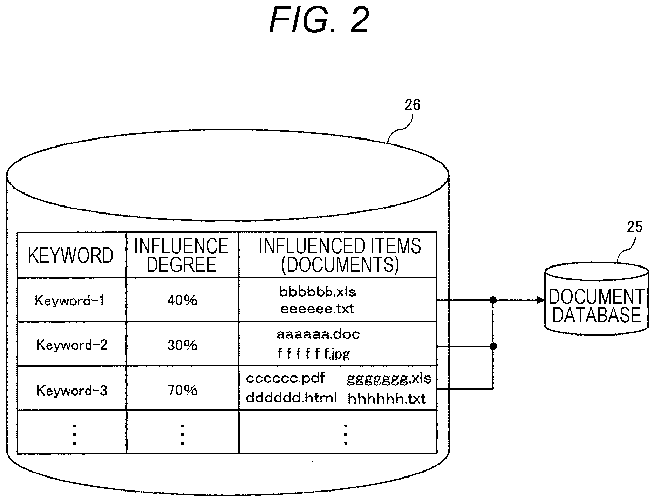

FIG. 2 is an explanatory diagram of a data structure stored in the storage unit 26 illustrated in FIG. 1. As illustrated in FIG. 2, the storage unit 26 stores an "influence degree" and an "influenced item (document) " in association with each other for each "keyword". For example, in a case in which the "keyword" is "Keyword-1", the "influence degree" is "40%", and items (documents) influenced by "Keyword-1" are "bbbbbb.xls" and "eeeeee.txt". Further, in a case in which the "keyword" is "Keyword-2", the "influence degree" is "30%", and items (documents) influenced by "Keyword-2" are "aaaaaa.doc" and "ffffff.jpg". In a case in which the "keyword" is "Keyword-3," the "influence degree" is "70%", and items (documents) influenced by "Keyword-3" are "cccccc.pdf", "dddddd.html", "gggggg.xls", and "hhhhhh.txt". The "influenced items (documents)" stored in the storage unit 26 in association with the "influence degree" for each "keyword" are linked with corresponding documents stored in document database 25 and nodes, and the storage unit 26 and the document database 25 constitute a so-called relational database.

Here, the "influence degree" is an index indicating a degree in which an input search keyword influences a search result when the search executing unit 22 accesses the document database 25 via the internal bus 27 on the basis of the search keyword input by the searcher (user) through the input unit 3 and the search keyword input receiving unit 21, and searches for or extract documents stored in the document database 25. In other words, for example, the "influence degree" indicates a degree of influence of the presence or absence of the search keyword on the search result such as, for example, "this document was searched for since this search keyword was included. If this search keyword were not included, this document would not be searched for by other search keywords", and a case in which the search result is different from an intention of the searcher (user) is included. In other words, it does not matter whether or not the search result coincides with the intention of the searcher (user) . A calculation of the "influence degree" will be described later.

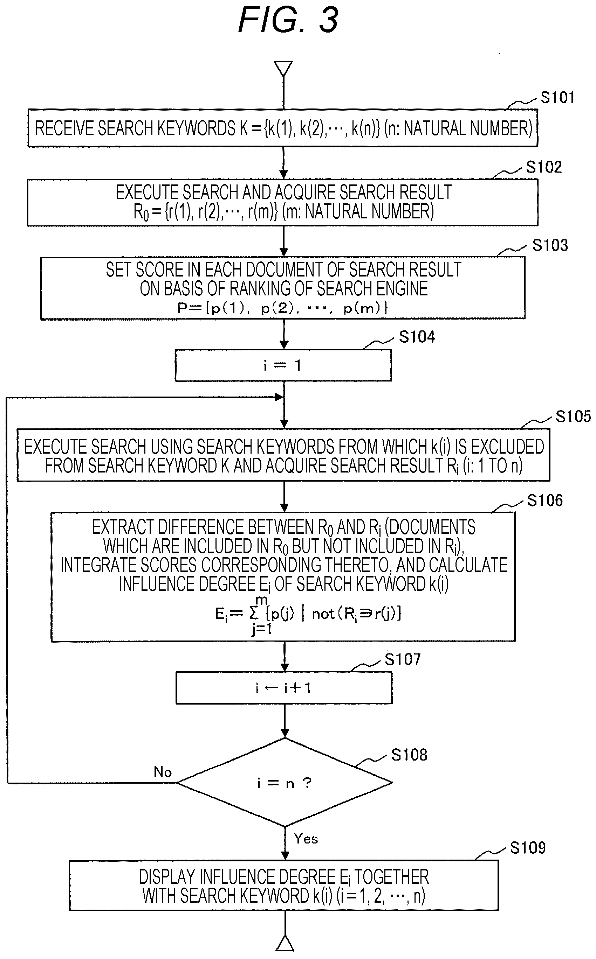

An overview of a process of the information search device 1 will be described below. Here, a form in which, in a case in which a plurality of search keywords are input, and documents are searched for, the influence of the presence or absence of an input search keyword on the search result is evaluated for each search keyword, and the validity of the search keyword is suggested to the searcher (user) will be described as an example. FIG. 3 is a schematic processing flow diagram of the information search device 1 illustrated in FIG. 1.

First, if a plurality of search keywords {k(1), k(2), ..., k(n)} (n: a natural number) are input via the input unit 3 by searcher (user), the search keyword input receiving unit 21 constituting the information search unit 2 receives search keywords K = {k(1), k(2), ..., k(n)} (step S101).

In step S102, the search keyword input receiving unit 21 transfers a plurality of received search keywords K to the search executing unit 22 via the internal bus 27. The search executing unit 22 accesses the document database 25 via the internal bus 27 using a known arbitrary search engine and executes a search. Then, the search executing unit 22 acquires R₀ = {r(1), r(2), ..., r(m)} (m: a natural number) as a search result.

In step S103, the search executing unit 22 sets a score corresponding to a ranking in each document of the search result R₀, that is, r(1), r(2), ..., r(m) on the basis of the ranking of the search engine. Accordingly, the score set in each document of the search result R₀ is P = {p(1), p(2), ..., p(m)}. A method of setting the score will be described later.

Then, the search executing unit 22 sets i = 1 as an initial value (step S104), executes the search using the keyword in which the search keyword K = {k(1), k(2), ..., k(n)} is excluded from k(i), and acquires the search result Rᵢ (i: 1 to n) (step S105) . In other words, in step S105, the search executing unit 22 executes the search again using the search keyword group {k(2), ..., k(n)} from which a specific search keyword, that is, k(1) since i = 1 is set here is excluded from a plurality of search keyword groups {k(1), k(2), ..., k(n)} which are initially received (input) in step S101, and obtains a search result R₁.

In step S106, the search keyword influence degree calculating unit 23 extracts documents of differences between the search result R₀ (step S102) searched using all the search keywords K (the search keyword group {k(1), k(2), ..., k(n)}) input by the searcher (user) and the search result Rᵢ (step S105) searched by excluding the specific search keyword k(i), integrates the corresponding score p(j) set in step S102, and calculates an influence degree Eᵢ of the excluded search keyword k(i). Since i = 1 is set here, the documents of the differences between the search result R₀ and the search result R₁ searched by excluding the specific search keyword k(1) are extracted, and an influence degree E₁ of the excluded search keyword k(1) is obtained.

In step S107, the search keyword influence degree calculating unit 23 sets i + 1 as i (i is incremented by 1). Then, the search keyword influence degree calculating unit 23 determines whether or not i reaches n (step S108), and in a case in which i does not reach n, the search keyword influence degree calculating unit 23 returns to step S105, the search executing unit 22 repeatedly executes the process of step S105, and the search keyword influence degree calculating unit 23 repeatedly executes the process of step S106 to step S108. In step S108, in a case in which i reaches n, the process proceeds to step S109.

Here, for example, in a case in which n > 2, in step S108, the search keyword influence degree calculating unit 23 determines that i does not reach n and returns to step S105. In step S105, the search executing unit 22 executes the search again using the search keyword group {k(1), k(3), ..., k(n)} from which a specific search keyword, that is, k(2) since i = 2 is set here is excluded from a plurality of search keyword groups {k(1), k(2), ..., k(n)} which are initially received (input) in step S101, and obtains a search result R₂. In step S106, the search keyword influence degree calculating unit 23 extracts documents of differences between the search result R₀ (step S102) searched using all the search keywords K (the search keyword group {k(1), k(2), ..., k(n)}) input by the searcher (user) and the search result R₂ (step S105) searched by excluding the specific search keyword k(2), integrates the corresponding score p(j) set in step S102, and calculates an influence degree E₂ of the excluded search keyword k(2).

In step S109, the search keyword influence degree calculating unit 23 transfers the search keyword k(i) and the influence degree Eᵢ of the search keyword k(i) to the search result display control unit 24 via the internal bus 27. The search result display control unit 24 displays the influence degree Eᵢ (i = 1, 2, ..., n) of the search keyword k(i) on the screen of the display unit 4 together with the search keyword k(i).

In particular, although not illustrated, in step S109, the search keyword influence degree calculating unit 23 accesses the storage unit 26 via the internal bus 27 and stores the search keyword k(i), the influence degree Eᵢ of the search keyword k(i), and the documents of the search result in fields of "keyword", "influence degree", and "influenced items (documents)" as illustrated in FIG. 2. Instead of this, each time step S106 is executed, the search keyword influence degree calculating unit 23 may sequentially access the storage unit 26 via the internal bus 27 and store the search keyword k(i), the influence degree Eᵢ of the search keyword k(i), and the documents of the search result in fields of "keyword", "influence degree", and "influenced items (documents)" of the storage unit 26.

In the present embodiment, the search keyword influence degree calculating unit 23 executes the process of step S106 to step S108, but the present invention is not limited thereto. For example, the search keyword influence degree calculating unit 23 may execute only step S106, and the search executing unit 22 may execute step S107 and step S108.

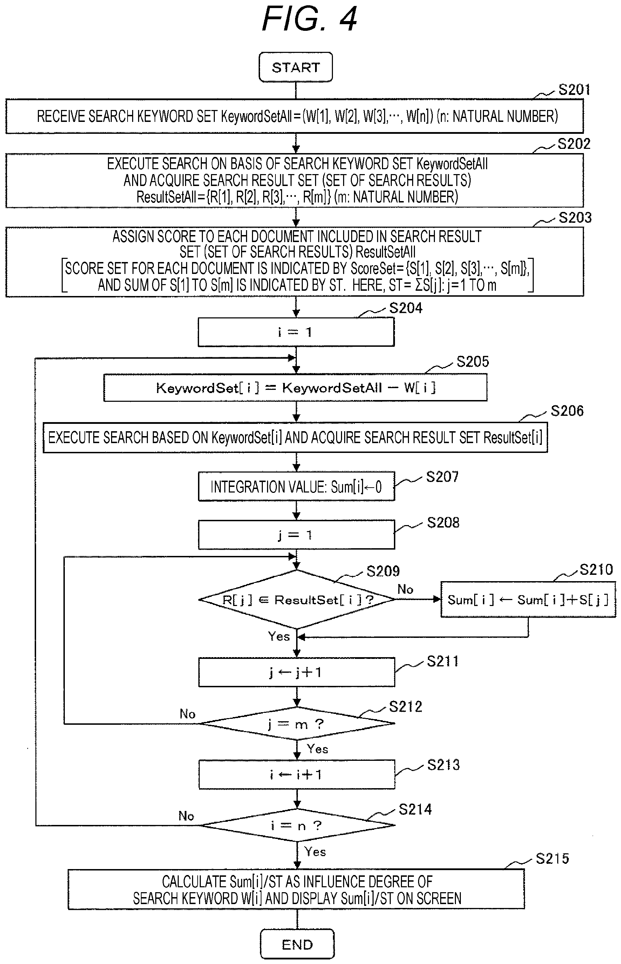

Next, the calculation of the influence degree of the search keyword will be described in further detail. FIG. 4 is a process flow diagram for calculating the influence degree of the search keyword through the information search unit 2 constituting the information search device 1 illustrated in FIG. 1. In the following description, a search keyword group for inputting a plurality of search keywords and performing the search is referred to as a "search keyword set" and indicated by KeywordSetAll for the sake of convenience. In FIG. 4, n search keywords input by the searcher (user) through the input unit 3 are indicated by W[1], W[2], W[3], ..., W[n] (n : a natural number).

First, in step S201, if the n search keywords W[1], W[2], W[3], ..., W[n] (the search keyword set) are input by the searcher (user) through the input unit 3, the search keyword input receiving unit 21 (FIG. 1) constituting the information search unit 2 receives the search keyword set KeywordSetAll.

In step S202, the search keyword input receiving unit 21 transfers the received search keyword set KeywordSetAll to the search executing unit 22 via the internal bus 27. The search executing unit 22 (FIG. 1) accesses the document database 25 via the internal bus 27 using a known arbitrary search engine, executes the search on the basis of the search keyword set KeywordSetAll, and acquires the search result. Hereinafter, a set of search results is referred to as a "search result set" and indicated by ResultSetAll. Further, the m searched documents are indicated by R[1], R[2], R[3], ..., R[m] (m: a natural number).

The search executing unit 22 executes the search method using the search engine and obtains a ranking of the search result by a known method. In step S202, instead of acquiring all of the search results as ResultSetAll, m search results of the high rankings may be acquired.

Then, in step S203, the search executing unit 22 assigns a score to each of the documents included in the search result set ResultSetAll. The score is assigned so that the search results of the high rankings receive high scores. For example, when m is set to 100, the highest ranking receives 100 points, then the score is sequentially decremented by 1, and the lowest ranking receives one point. Alternatively, for example, each ranking may be non-linearly weighted. However, in this case, the score is a positive number. In the following description, the score assigned to each document is referred to as a "score set" and indicated by ScoreSet. Further, scores of m documents are indicated by ScoreSet = S[1], S[2], S[3], ..., S[m]. Further, a sum of S[1] to S[m] is indicted by ST. The variables defined so far are summarized as follows. $KeywordSetAll = \left\{W \left[1\right] , W \left[2\right] , W \left[3\right] , … , W \left[n\right]\right\}$ $ResultSetAll = \left\{R \left[1\right] , R \left[2\right] , R \left[3\right] , … , R \left[m\right]\right\}$ $ScoreSet = \left\{S \left[1\right] , S \left[2\right] , S \left[3\right] , … , S \left[m\right]\right\} ,$ $ST = \sum \left(S \left[i\right] : i = 1 to m\right)$

Then, the search executing unit 22 sets i = 1 as an initial value (step S204), and defines KeywordSet [i] as a search keyword group from which the search keyword W(i) is excluded from the search keyword set KeywordSetAll) (step S205). In this case, since i = 1 is set, KeywordSet[1] is obtained as the search keyword group.

In step S206, the search executing unit 22 accesses the document database 25 via the internal bus 27, re-searches the document database 25 using the search keyword group KeywordSet[i] obtained in step S205, and obtains the search result set ResultSet[i]. Since i = 1 is set here, the search result set ResultSet[1] is obtained using the search keyword group KeywordSet[1].

In step S207, in order to initialize the integration value, the search keyword influence degree calculating unit 23 sets "0" in the integration value Sum[i] as the initial value and sets j = 1 (step S208).

In step S209, the search keyword influence degree calculating unit 23 determines whether or not there is a document coinciding the document included in the search result set ResultSet[i] based on the search keyword group KeywordSet[i] obtained in step S206 among the documents included in R[j] which is the search result set ResultSetAll. In other words, in a case in which there is a document which is included in R[j] which is ResultSetAll but not included in ResultSet[i], the process proceeds to step S210, a score S[j] (the score of each document set in step S203) is integrated for the document, and the process proceeds to step S211. On the other hand, in a case in which there is no document which is included in R[j] which is ResultSetAll but not included in ResultSet[i], the process proceeds to step S211.

In step S211, the search keyword influence degree calculating unit 23 sets j + 1 as j (incrementing j by 1). Then, the search keyword influence degree calculating unit 23 determines whether or not j reaches m (step S212), and in a case in which j does not reach m, the process returns to step S209, and the search keyword influence degree calculating unit 23 repeatedly executes the process of step S209 to step S212. In a case in which j reaches m in step S212, the process proceeds to step S213.

In step S213, the search keyword influence degree calculating unit 23 sets i + 1 (i is incremented by 1). Then, the search keyword influence degree calculating unit 23 determines whether or not i reaches n (step S214), and in a case in which i does not reach n, the search keyword influence degree calculating unit 23 returns to step S205, the search executing unit 22 repeatedly executes step S205 and step S206, and the search keyword influence degree calculating unit 23 repeatedly executes the process of step S207 to step S214. In step S214, in a case in which i reaches n, the process proceeds to step S215.

In step S215, the search keyword influence degree calculating unit 23 calculates Sum[i]/ST as the influence degree Eᵢ of the search keyword W[i] and transfers Sum[i]/ST to the search result display control unit 24 via the internal bus 27. Here, ST is ST = ∑(S[i] : i = 1 to m) as described above. The search result display control unit 24 displays Sum[i]/ST which is the influence degree Eᵢ of the search keyword W[i] (i = 1, 2, ..., n) on the screen of the display unit 4 together with the search keyword W[i].

In particular, although not illustrated, in step S215, the search keyword influence degree calculating unit 23 accesses the storage unit 26 via the internal bus 27, and stores the search keyword W[i] , Sum[i]/ST which is the influence degree Eᵢ of the search keyword W[i], and the documents of the search result are stored in fields of "keyword", "influence degree", and "influenced items (documents)" as illustrated in FIG. 2.

In the process of comparing the documents in step S209, that is, the comparison of the documents included in R[j] which is the search result set ResultSetAll and the documents included in the search result set ResultSet[i] based on the search keyword group KeywordSet[i] obtained in step S206 may be performed at a high speed, for example, by assigning hash values to the documents on the basis of information such as a title and a creation date and time, an author, a document size, or the like of a document.

In step S215, the value obtained by dividing the integration value Sum[i] by ST = ∑(S[i] : i = 1 to m) is displayed on the screen of the display unit 4 as the influence degree Eᵢ (i = 1, 2, ..., n), but instead of this, the integration value Sum[i] may be stored in an array, normalized so that the sum ∑Eᵢ of the influence degree Eᵢ (i = 1, 2, ..., n) becomes 100%, and then displayed on the screen of the display unit 4.

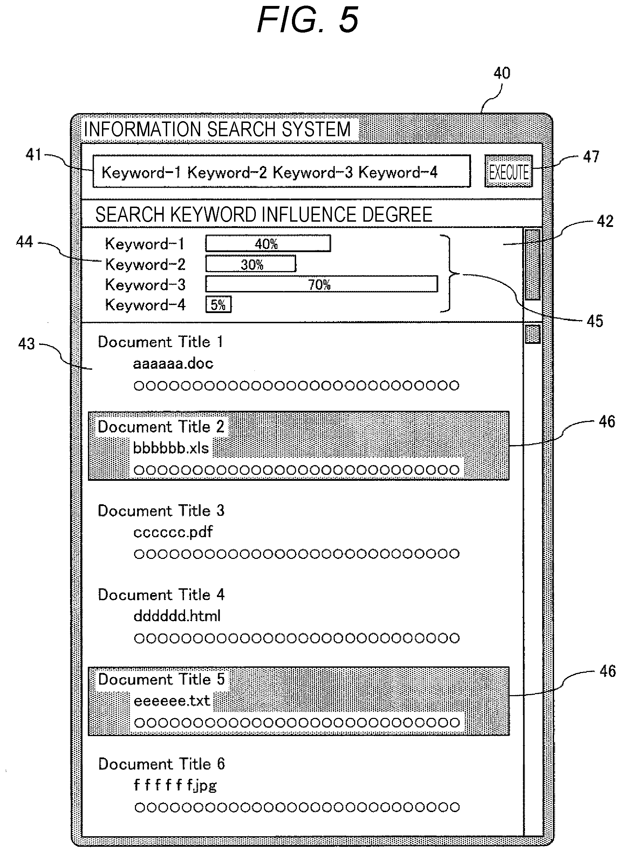

FIG. 5 is a diagram illustrating a display screen example of the display unit 4 illustrated in FIG. 1. As illustrated in FIG. 5, a display screen 40 includes a first display region 41 serving as a search keyword input field to which a search keyword is input by the searcher (user), a second display region 42 that displays a search keyword influence degree for each search keyword, and a third display region 43 that displays the search result based on the input search keyword. An "execute" button 47 is arranged on the display screen 40 at a position adjacent to the first display region 41 serving as the search keyword input field, and if the searcher (user) positions the cursor on the "execute" button 47 and clicks it using the input unit 3 such as a mouse, the information search unit 2 executes the processing of step S201 to step S215 illustrated in FIG. 4. The second display region 42 includes a search keyword display region 44 and a search keyword influence degree display region 45, and the search keyword influence degree display region 45 displays a search keyword influence degree in a bar graph form together with numerical values. The influence degree of the search keyword displayed in the search keyword influence degree display region 45 is not limited to a bar graph form and may be other display forms or may be any display form that can be visually recognized by the searcher (user).

In the display screen example illustrated in FIG. 5, four keywords, Keyword-1, Keyword-2, Keyword-3, and Keyword-4 are input to the first display region 41 serving as the search keyword input field as the search keyword, and the documents included in ResultSetAll which is the search result is displayed in the third display region 43 in a list form. The searcher (user) can check all the documents included in ResultSetAll which is the search result by scrolling down a scroll bar displayed at the right end of the third display region 43.

The search keyword Keyword-1 corresponds to W[1] illustrated in step S201 of FIG. 4, the search keyword Keyword-2 corresponds to W[2], the search keyword Keyword-3 corresponds to W[3], and the search keyword Keyword-4 corresponds to W[4].

Then, Sum[1]/ST which is the influence degree E₁ of Keyword-1 obtained in step S215 by the search keyword influence degree calculating unit 23 is 40%, Sum[2]/ST which is the influence degree E₂ of Keyword-2 is 30%, Sum[3]/ST which is the influence degree E₃ of Keyword-3 is 70%, and Sum[4]/ST which is the influence degree E₄ of Keyword-4 is 5%. In the display state illustrated in FIG. 5, if the searcher (user) positions the cursor on Keyword-1 in the search keyword display region 44 and clicks using the input unit 3 such as a mouse, items (documents) influenced by the search keyword Keyword-1 are displayed highlighted. In other words, two documents, that is, "Document Title 2 bbbbbb.xls" and "Document Title 5 eeeeee.txt" in the third display region 43 are displayed highlighted as indicated by 46 to be distinguishable from other documents. Here, if at least one of the documents "Document Title 2 bbbbb.xls" and "Document Title 5 eeeeee.txt" which are documents displayed highlighted as indicated by 46 is an unintended document, that is, different from the document which should be acquired as the search result, the searcher (user) can easily determine that it is necessary to change Keyword-1 input to the first display region 41 serving as the search keyword input field on the screen.

In the present embodiment, the configuration in which, when the searcher (user) selects and designates Keyword-1 in the search keyword display region 44, items (documents) influenced by the search keyword Keyword-1 are displayed highlighted is employed, but the present invention is not necessarily limited thereto. Any configuration may be employed as long as items (documents) influenced by the search keyword which is selected and designated are displayed in a display form which can be distinguished from other documents, for example, items (documents) influenced by the search keyword which is selected and designated are displayed blinked or highlighted.

Further, the searcher (user) views the search keyword influence degree displayed in the search keyword influence degree display region 45 in the second display region 42 and/or the search result displayed distinguishable from other documents displayed highlighted in the third display region 43 as indicated by 46 and then can change a search keyword with an influence degree, for example, if the searcher (user) is not satisfied with the search result at all or change the search keyword causing the document to be searched for if the document displayed highlighted as indicated by 46 is unnecessary.

As described above, according to the present embodiment, the searcher (user) can easily understand the influence degree in which the search result is influenced by the presence or absence of the search keyword input from the searcher (user).

Further, according to the present embodiment, it is possible to implement the information search device and the information search method which enable the searcher (user) to view the search keyword influence degree displayed in the search keyword influence degree display region 45 in the second display region 42 and/or the search result displayed distinguishable from other documents displayed highlighted in the third display region 43 as indicated by 46 and then be able to immediately change a search keyword with an influence degree, for example, if the searcher (user) is not satisfied with the search result at all or change the search keyword causing the document to be searched for if the document displayed highlighted as indicated by 46 is unnecessary.

### Second embodiment

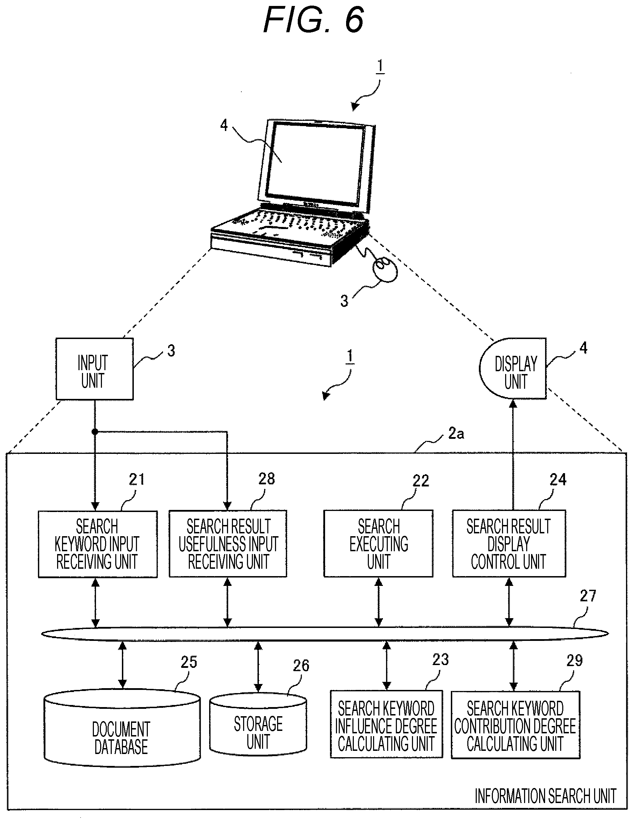

FIG. 6 is an external appearance diagram and a functional block diagram of an information search device of a second embodiment according to another embodiment of the present invention. The present embodiment differs from the first embodiment in that a search result usefulness input receiving unit and a search keyword contribution degree calculating unit are further installed in the information search unit constituting the information search device described in the first embodiment. Constituent elements similar to those in the first embodiment are denoted by the same reference numerals, and description overlapping with the first embodiment will be omitted below.

As illustrated in FIG. 6, an information search unit 2a constituting the information search device 1 of the present embodiment includes an input unit 3 such as a keyboard or a mouse, a display unit 4 such as an LCD or an organic EL display, and an information search unit 2a. The information search unit 2a includes a search keyword input receiving unit 21 that receives a search keyword input via the input unit 3, a document database 25 that stores documents such as document data or image data as described above, a search executing unit 22 that searches for documents stored in the document database 25, for example, through a known search engine on the basis of an input search keyword, a search keyword influence degree calculating unit 23 that obtains an influence degree of an input search keyword on a search result obtained by the search executing unit 22, a search result usefulness input receiving unit 28 that receives usefulness for the search result input by the searcher (user) through the input unit 3, a search keyword contribution degree calculating unit 29 that obtains a contribution degree of an input search keyword to a search result, a storage unit 26 that stores the influence degree obtained by the search keyword influence degree calculating unit 23 and the contribution degree obtained by the search keyword contribution degree calculating unit 29 in association with each keyword together with an influenced document, and a search result display control unit 24 that performs control such that at least a search result or the like is displayed on a display screen of the display unit 4. In the present embodiment, a configuration in which the document database 25 is installed in the information search unit 2 of the information search device 1 will be described as an example, but the present invention is not limited thereto. For example, a configuration in which the document database 25 is connected to the information search device 1 as an external storage device may be provided.

The search keyword input receiving unit 21, the search result usefulness input receiving unit 28, the search executing unit 22, the search keyword influence degree calculating unit 23, the search keyword contribution degree calculating unit 29, the search result display control unit 24, the storage unit 26, and the document database 25 are accessibly connected with one another via an internal bus 27. Here, for example, the search executing unit 22, the search keyword influence degree calculating unit 23, the search keyword contribution degree calculating unit 29, and the search result display control unit 24 are implemented by a storage device such as a ROM that stores various kinds of programs (not illustrated), a RAM that temporarily stores data of a calculation process or a processing process, and a processor such as a CPU. The processor reads various kinds of programs stored in the ROM and executes a read program.

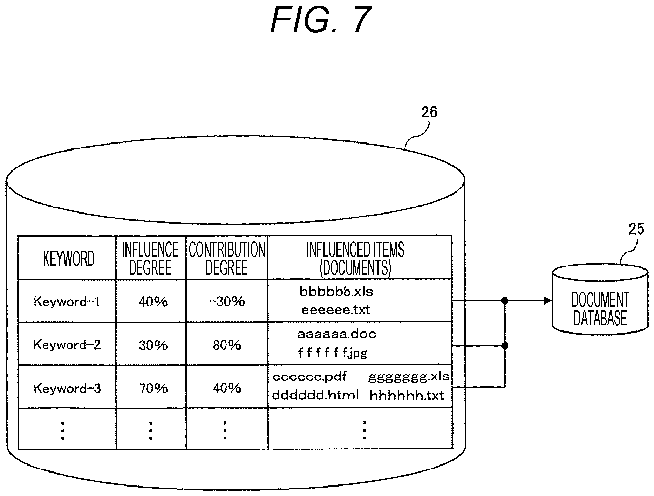

FIG. 7 is an explanatory diagram of a data structure stored in the storage unit illustrated in FIG. 6. As illustrated in FIG. 7, the storage unit 26 stores an "influence degree", a "contribution degree", and an "influenced item (document) " in association with one another for each "keyword" . For example, in a case in which the "keyword" is "Keyword-1", the "influence degree" is "40%", the contribution degree" is "-30%", and items (documents) influenced by "Keyword-1" are "bbbbbb.xls" and "eeeeee.txt". Further, in a case in which the "keyword" is "Keyword-2", the "influence degree" is "30%", the contribution degree" is "80%", and items (documents) influenced by "Keyword-2" are "aaaaaa.doc" and "ffffff.jpg". In a case in which the "keyword" is "Keyword-3", the "influence degree" is "70%", the contribution degree" is "40%", and items (documents) influenced by "Keyword-3" are "cccccc.pdf", "dddddd.html", "gggggg.xls", and "hhhhhh.txt". The "influenced items (documents)" stored in the storage unit 26 in association with the "influence degree" and the "contribution degree" for each "keyword" are linked with corresponding documents stored in document database 25 and nodes, and the storage unit 26 and the document database 25 constitute a so-called relational database.

Here, the "influence degree" is similar to that in the first embodiment. On the other hand, the "contribution degree" is an index indicating whether or not the search result by the search executing unit 22 is close to a regular value, that is, whether or not the input search keyword contributes to the search result. In other words, the "contribution degree" is an index indicating a degree in which the search result coincides with the intention of the searcher (user). A calculation of the "contribution degree" will be described later.

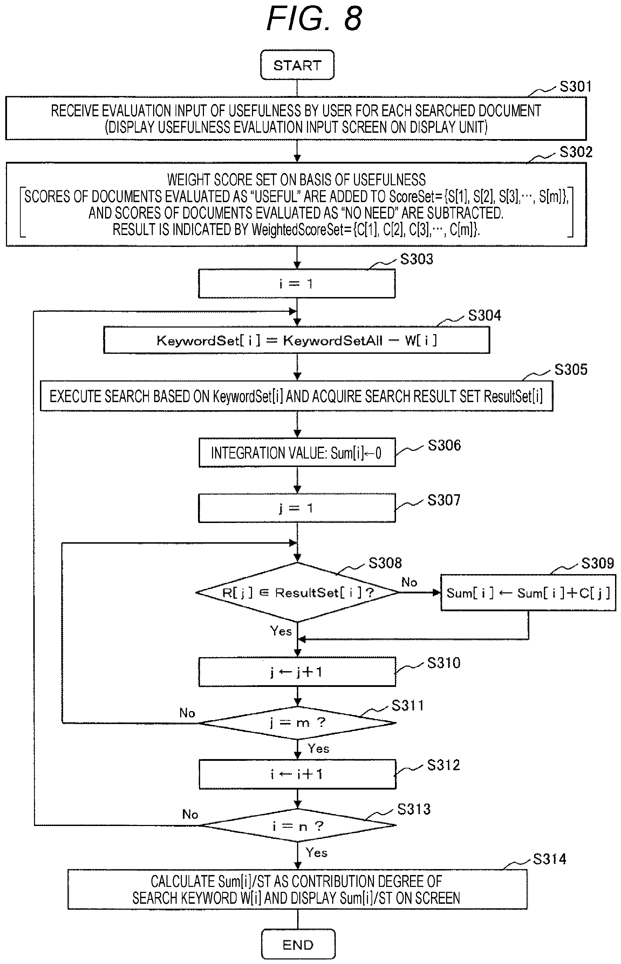

A processing flow of the information search unit 2a constituting the information search device 1 will be described below. A calculation of the influence degree of the search keyword by the information search unit 2a is similar to steps S201 to S215 illustrated in FIG. 4 described in the first embodiment, and thus description thereof will be omitted, and a calculation of the contribution degree of the search keyword by the information search unit 2a will be described below in detail. FIG. 8 is a process flow diagram for calculating the contribution degree of the search keyword by the information search unit 2a illustrated in FIG. 6.

First, in step S301, in a case in which an evaluation related to the usefulness of each document included in the search result set by the search executing unit 22 using the search keyword is input by the searcher (user) through the input unit 3, the search result usefulness input receiving unit 28 (FIG. 6) constituting the information search unit 2a receives an evaluation input of the usefulness of each document included in the search result set. Here, a usefulness evaluation input screen displayed on the display unit 4 which enables the evaluation of the usefulness to be input by the searcher (user) will be described later.

In step S302, the search executing unit 22 weights the score set on the basis of validities of the m documents R[1], R[2], R[3], ..., R[m] (m: a natural number) included in the search result set ResultSetAll. Specifically, scores of documents evaluated as "useful" are added to the score set ScoreSet = {S[1], S[2], S[3], ..., S[m]} assigned to the m documents included in the search result set ResultSetAll, scores of documents evaluated as "no need" are conversely subtracted, and WeightedScoreSet = {C[1], C[2], C[3], ..., C[m]} is obtained accordingly. For example, if the document R[1] is determined to be "useful", C[1] ← S[1] × 2 is set, and if the document R[2] is determined as "no need", C[2] → 0 - S[2] (positive/negative inversion). For the documents in which neither "useful" nor "no need" is designated, C[i] and S[i] are set to the same value. In other words, the weighting is performed such that the score of the document determined as "useful" increases, and the score of the document determined as "no need" decreases.

Then, the search executing unit 22 sets i = 1 as an initial value (step S303), and defines KeywordSet [i] as a search keyword group from which the search keyword W(i) is excluded from the search keyword set KeywordSetAll) (step S304). In this case, since i = 1 is set, KeywordSet[1] is obtained as the search keyword group.

In step S305, the search executing unit 22 accesses the document database 25 via the internal bus 27, re-searches the document database 25 using the search keyword group KeywordSet[i] obtained in step S205, and obtains the search result set ResultSet[i]. Since i = 1 is set here, the search result set ResultSet[1] is obtained using the search keyword group KeywordSet[1].

In step S306, in order to initialize the integration value, the search keyword contribution degree calculating unit 29 sets "0" in the integration value Sum[i] as the initial value and sets j = 1 (step S307).

In step S308, the search keyword contribution degree calculating unit 29 determines whether or not there is a document coinciding the document included in the search result set ResultSet[i] based on the search keyword group KeywordSet[i] obtained in step S304 among the documents included in R[j] which is the search result set ResultSetAll. In other words, in a case in which there is a document which is included in R[j] which is ResultSetAll but not included in ResultSet [i], the process proceeds to step S309, C[j] (the score weighted on the basis of the usefulness of each document set in step S302) which is the weighted score (WeightedScore) is integrated for the document, and the process proceeds to step S310. On the other hand, in a case in which there is no document which is included in R[j] which is ResultSetAll but not included in ResultSet[i], the process proceeds to step S310.

In step S310, the search keyword contribution degree calculating unit 29 sets j + 1 as j (incrementing j by 1). Then, the search keyword contribution degree calculating unit 29 determines whether or not j reaches m (step S311), and in a case in which j does not reach m, the process returns to step S308, and search keyword contribution degree calculating unit 29 repeatedly executes the process of step S308 to step S311. In a case in which j reaches m in step S311, the process proceeds to step S312.

In step S312, the search keyword contribution degree calculating unit 29 sets i + 1 (i is incremented by 1). Then, the search keyword contribution degree calculating unit 29 determines whether or not i reaches n (step S313), and in a case in which i does not reach n, the search keyword contribution degree calculating unit 29 returns to step S304, the search executing unit 22 repeatedly executes step S304 and step S305, and the search keyword contribution degree calculating unit 29 repeatedly executes the process of step S306 to step S313. In step S313, in a case in which i reaches n, the process proceeds to step S314.

In step S314, the search keyword contribution degree calculating unit 29 calculates Sum[i]/ST as the contribution degree of the search keyword W[i] and transfers Sum[i]/ST to the search result display control unit 24 via the internal bus 27. Here, ST is ST = ∑(S[i] : i = 1 to m) as described above. The search result display control unit 24 displays Sum[i]/ST which is the contribution degree of the search keyword W[i] on the screen of the display unit 4 together with the search keyword W[i] .

In particular, although not illustrated, in step S314, the search keyword contribution degree calculating unit 29 accesses the storage unit 26 via the internal bus 27, and stores the search keyword W[i], Sum[i]/ST which is the contribution degree of the search keyword W[i], and the documents of the search result are stored in fields of "keyword", "influence degree", "contribution degree", and "influenced items (documents)" as illustrated in FIG. 7.

In the process of comparing the documents in step S308, that is, the comparison of the documents included in R[j] which is the search result set ResultSetAll and the documents included in the search result set ResultSet[i] based on the search keyword group KeywordSet[i] obtained in step S305 may be performed at a high speed, for example, by assigning hash values to the documents on the basis of information such as a title and a creation date and time, an author, a document size, or the like of a document.

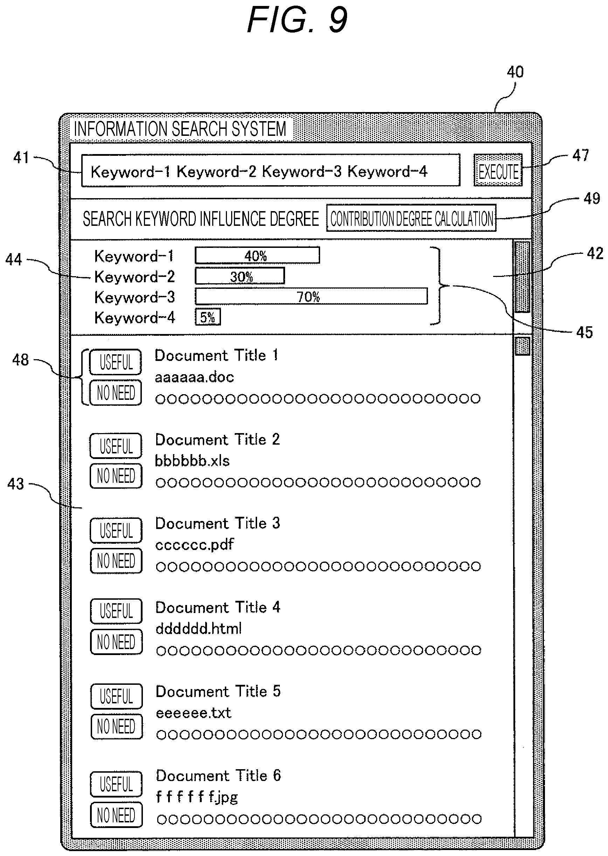

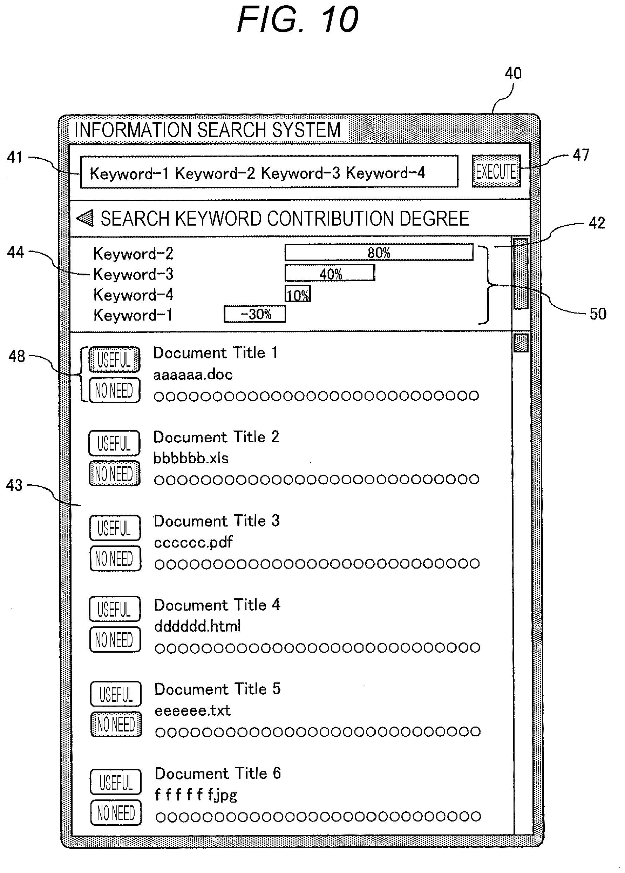

FIG. 9 illustrates a display screen example of the display unit 4 illustrated in FIG. 6, that is, an example of an input screen of the usefulness of the search result, and FIG. 10 illustrates a display screen example of the display unit 4 illustrated in FIG. 6, that is, a screen example in which the contribution degree of the search keyword is displayed.

As illustrated in FIG. 9, a display screen 40 includes a first display region 41 serving as a search keyword input field to which a search keyword is input by the searcher (user), a second display region 42 that displays a search keyword influence degree for each search keyword, and a third display region 43 that displays the search result based on the input search keyword. An "execute" button 47 is arranged on the display screen 40 at a position adjacent to the first display region 41 serving as the search keyword input field, and if the searcher (user) positions the cursor on the "execute" button 47 and clicks using the input unit 3 such as a mouse, the information search unit 2a executes the processing of step S201 to step S215 illustrated in FIG. 4, similarly to the first embodiment. The second display region 42 includes a search keyword display region 44 and a search keyword influence degree display region 45, and the search keyword influence degree display region 45 displays a search keyword influence degree in a bar graph form together with numerical values. The influence degree of the search keyword displayed in the search keyword influence degree display region 45 is not limited to a bar graph form and may be other display forms or may be any display form that can be visually recognized by the searcher (user) .

A "contribution degree calculation" execution button 49 is arranged on an upper part of the second display region 42, and if the searcher (user) positions the cursor on the "contribution degree calculation" execution button 49 and clicks it using the input unit 3 such as a mouse, the information search unit 2a executes steps S301 to S314 illustrated in FIG. 8.

In the display screen example illustrated in FIG. 9, four keywords, Keyword-1, Keyword-2, Keyword-3, and Keyword-4 are input to the first display region 41 serving as the search keyword input field as the search keyword, and the documents included in ResultSetAll which is the search result is displayed in the third display region 43 in a list form. The searcher (user) can check all the documents included in ResultSetAll which is the search result by scrolling down a scroll bar displayed at the right end of the third display region 43. A usefulness selection designation button 48 that enables the searcher (user) to select and designate "useful" or "no need" is disposed on the left side of each document included in ResultSetAll displayed in the third display region 43 in a list form. The searcher (user) can easily determine whether or not all documents included in ResultSetAll which is the search result displayed in the third display region 43 in the list form coincide with the intention of the searcher (user) and inputs the evaluation of the usefulness by moving the cursor to the position of "useful" or "no need" of the usefulness selection designation button 48 of a desired document and clicking it using the input unit 3 such as a mouse.

FIG. 10 illustrates a state in which the searcher (user) designates "useful" of the usefulness selection designation button 48 for "Document title 1 aaaaaa.doc among all the documents included in ResultSetAll which is the search result displayed in the third display region 43, designates "no need" of the usefulness selection designation button 48 for "Document Title 2 bbbbbb.xls" and "Document Title 5 eeeeee.txt", and designates neither "useful" nor "no need" for "Document Title 3 cccccc.pdf", "Document Title 4 dddddd.html", and "Document Title 6 ffffff.jpg". The, in this state, if the searcher (user) clicks the "contribution degree calculation" execution button 49 illustrated in FIG. 9 using the input unit 3 such as a mouse, the search result usefulness input receiving unit 28 executes step S301 illustrated in FIG. 8, the search executing unit 22 executes steps S302 to S305, and the search keyword contribution degree calculating unit 29 executes steps S306 to S314.

As illustrated in FIG. 10, if the contribution degree is obtained for each search keyword by the search keyword contribution degree calculating unit 29, the display state illustrated in FIG. 9, that is, the second display region 42 including the search keyword display region 44 and the search keyword influence degree display region 45 is switched to a display state including the search keyword display region 44 and a search keyword contribution degree display region 50. Specifically, the search keyword contribution degree of 80% for the search keyword Keyword-2, the search keyword contribution degree of 40% for the search keyword Keyword-3, the search keyword contribution degree of 10% for the search keyword Keyword-4, and the search keyword contribution degree of -30% for the search keyword Keyword-1 are displayed in the search keyword contribution degree display region 50 together with bar graphs. In the example illustrated in FIG. 10, the configuration in which the numerical values of the contribution degree are displayed in the search keyword contribution degree display region 50 in the second display region 42 in the bar graphs is employed, but the present invention is not limited thereto. The contribution degree displayed in the search keyword contribution degree display region 50 may be another display form or may have any other form as long as it is a display form which can be visually recognized by the searcher (user) .

Further, in the present embodiment, in a case in which most documents which are included in the search result set ResultSetAll for a certain search keyword W[i] but not included in the search result set ResultSet[i] based on the search keyword set group KeywordSet [i] from which the search keyword W[i] is excluded, that is, documents searched for due to the search keyword W[i] are determined to be "no need" by the searcher (user), the contribution degree may be negative, and the search keyword W[i] should be deleted or changed, and thus the searcher (user) can easily make a determination in accordance with the contribution degree quantitatively displayed in search keyword contribution degree display region 50 illustrated in FIG. 10.

In the present embodiment, the configuration in which the search keyword contribution degree calculating unit 29 constituting the information search unit 2a obtains the contribution degree for the search result for each search keyword is employed, but the present invention is not necessarily limited thereto. For example, a configuration in which a threshold value for the contribution degree is stored in a predetermined storage region of the storage unit 26 in advance, and the search keyword contribution degree calculating unit 29 compares Sum[i]/ST which is the contribution degree of the search keyword W[i] which can be obtained by executing step S314 illustrated in FIG. 8 with the threshold value, and automatically deletes the search keyword W[i] from the search keyword set KeywordSetAll when the contribution degree is the threshold value or less may be employed.

Further, the information search unit 2a of the present embodiment may have a learning function. In this case, a learning database is constituted by storing a designation input reception state of "useful" or "no need" for each document which is influenced by the search keyword displayed in the third display region 43 and used for calculating the contribution degree for each search keyword in association with a user ID and the search keyword as described with reference to FIG. 10. When the documents which are determined to be "no need" or to which an attribute of "no need" is added undergoes next or subsequent information search (at the time of search of documents stored in the document database 25 based on the search keyword), the search keyword contribution degree calculating unit 29 or the search executing unit 22 does not display the documents (document names) in the third display region 43 with reference to the learning database via the internal bus 27 even in a case in which the corresponding search keyword is input. Specifically, in the example illustrated in FIG. 10, the search keyword having influence on the documents "Document Title 2 bbbbbb.xls" and "Document Title 5 eeeeee.txt" is Keyword-1, and even if Keyword-1 is input to the first display region 41 which is the search keyword input field at the time of next or subsequent information search, the documents "Document Title 2 bbbbbb.xls" and "Document Title 5 eeeeee.txt" are not displayed in the third display region 43. Further, it is desirable that the learning function be configured to be enabled or disabled by the searcher (user). Accordingly, the work efficiency of the searcher (user) can be further improved. Further, the learning database may be stored in a predetermined storage region of the document database 25 in the information search unit 2a or a predetermined storage region of the storage unit 26 or may be implemented by an external storage device accessible by the information search unit 2a.

As described above, according to the present embodiment, in addition to the effect of the first embodiment, since the contribution degree of the search keyword is quantitatively displayed on the display screen, the searcher (user) can easily determine whether or not the search keyword is deleted or changed.

Further, according to the present embodiment, in a case in which the contribution degree obtained by the search keyword contribution degree calculating unit 29 is equal to or less than the threshold value stored in advance, the search keyword is automatically excluded from the search keyword set KeywordSetAll, and thus it is possible to reduce a time for checking the documents in the search result set by the searcher (user) and improve the workability.

Further, according to the present embodiment, the information search unit has a learning function, thereby improving the work efficiency of the searcher (user).

### Third embodiment

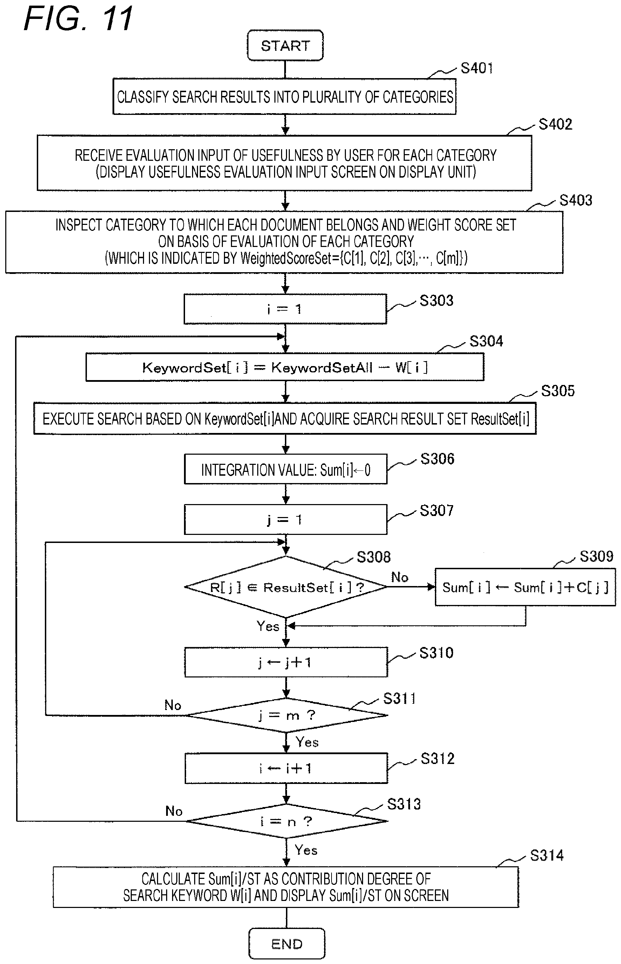

FIG. 11 is a process flow diagram for calculating the contribution degree of the search keyword by the information search device of a third embodiment according to another embodiment of the present invention. The present embodiment differs from the second embodiment in that the information search unit constituting the information search device illustrated in the second embodiment has a function of classifying a plurality of documents included in the search result set into a plurality of categories when the search keyword is input. The information search unit constituting the information search device of the present embodiment is the same as the information search unit 2a illustrated in FIG. 6 described in the second embodiment. Constituent elements similar to those in the second embodiment are denoted by the same reference numerals, and description overlapping with the second embodiment will be omitted below.

In the second embodiment, as illustrated in FIGS. 9 and 10, the usefulness selection designation button 48 that enables the searcher (user) to select and designate "useful" or "no need" is disposed, and in the configuration of the third display region 43 for displaying all the documents included in ResultSetAll which is the search result, in a case in which the number of documents included in ResultSetAll which is the search result is large, it takes time and effort for the searcher (user) to designate and input "useful" or "no need" in each document through the usefulness selection designation button 48. In other words, it takes a lot of time to designate and input "useful" or "no need". In this regard, in the present embodiment, the information search unit 2a (FIG. 6) constituting the information search device 1 classifies all the documents included in ResultSetAll which is the search result into a plurality of categories and designates and inputs "useful" or "no need" in each document by the usefulness selection designation button 48 for each category (in units of categories).

A processing flow of the information search unit 2a will be described below. The calculation of the influence degree of the search keyword by the information search unit 2a is similar to steps S201 to S215 illustrated in FIG. 4 described in the first embodiment, and thus description thereof will be omitted. As illustrated in FIG. 11, in step S401, the search executing unit 22 classifies the search result set ResultSetAll = {R[1], R[2], R[3], ..., R[m]} (m: a natural number) based on the search keyword set KeywordSetAll into a plurality of categories.

Here, a method of classifying into a plurality of categories will be described. The search executing unit 22 executes, for example, the following category classification method.

### (Category classification method)

The search executing unit 22 obtains a distance between two arbitrary documents (a document A and a document B) for all the documents stored in the document database 25. The distance between the document A and the document B is calculated by the following method.

First, the number of effective words of a document stored in the document database 25 is indicated by N, and an effective word group is indicated by (W₁, W₂, W₃, ..., W_{N}).

Then, the number of effective words of W₁ to W_{N} appearing in the document A is counted, and feature vectors (W_{1A}, W_{2A}, W_{3A}, ..., W_{NA}) of the document A are generated.

Here, for example, W_{1A} is the number of effective word W₁ appearing in the document A. Similarly, the number of effective words of W₁ to W_{N} appearing in the document B is counted, and feature vectors (W_{1B}, W_{2B}, W_{3B}, ..., W_{NB}) of the document B are generated.

At this time, a distance D_{AB} between the document A and the document B is indicated by the following Formula (1).
[Math. 1]${D}_{AB} = \sqrt{{\sum }_{k = 1}^{N} {\left({W}_{kA} - {W}_{kB}\right)}^{2}}$

If the distance D_{AB} between the documents is small, in order to indicate that the two documents A and B are similar, documents whose distance D_{AB} between the documents indicated by Formula (1) is equal to or less than a predetermined threshold value are extracted and grouped. This process is sequentially performed from the document in which the ranking of the search result is highest (except for the documents which have already been grouped).

On the other hand, if, for a document, there is no other document whose distance D_{AB} between the documents indicated by Formula (1) is equal to or less than a predetermined threshold value, the document is not grouped.

Returning to FIG. 11, in step S402, in the search executing unit 22, if the searcher (user) inputs the evaluation related to the usefulness through the input unit 3 for each category classified in step S401, the search result usefulness input receiving unit 28 (FIG. 6) constituting the information search unit 2a receives an evaluation input of the usefulness of each document included in the search result set.

In step S403, the search executing unit 22 inspects the category to which each document included in the search result set ResultSetAll belongs, and weights the score set on the basis of the evaluation of the usefulness of the category. Specifically, the weighted score set WeightedScoreSet = {C[1], C[2], C[3], ..., C[m]} assigned to the documents belonging to each category is obtained.

Then, the search executing unit 22 executes steps S303 to S305 illustrated in FIG. 8 described in the second embodiment, and the search keyword contribution degree calculating unit 29 similarly executes the process of steps S306 to S314 illustrated in FIG. 8, calculates Sum[i]/ST as the contribution degree of the search keyword W[i], and transfers Sum[i]/ST to the search result display control unit 24 via the internal bus 27. Here, ST is ST = ∑(S[i] : i = 1 to m) as described above. The search result display control unit 24 displays Sum[i]/ST which is the contribution degree of the search keyword W[i] on the screen of the display unit 4 together with the search keyword W[i].

In particular, although not illustrated, in step S314, the search keyword contribution degree calculating unit 29 accesses the storage unit 26 via the internal bus 27, and stores the search keyword W[i], Sum[i]/ST which is the contribution degree of the search keyword W[i], and the documents of the search result are stored in fields of "keyword", "influence degree", "contribution degree", and "influenced items (documents)" as illustrated in FIG. 7.

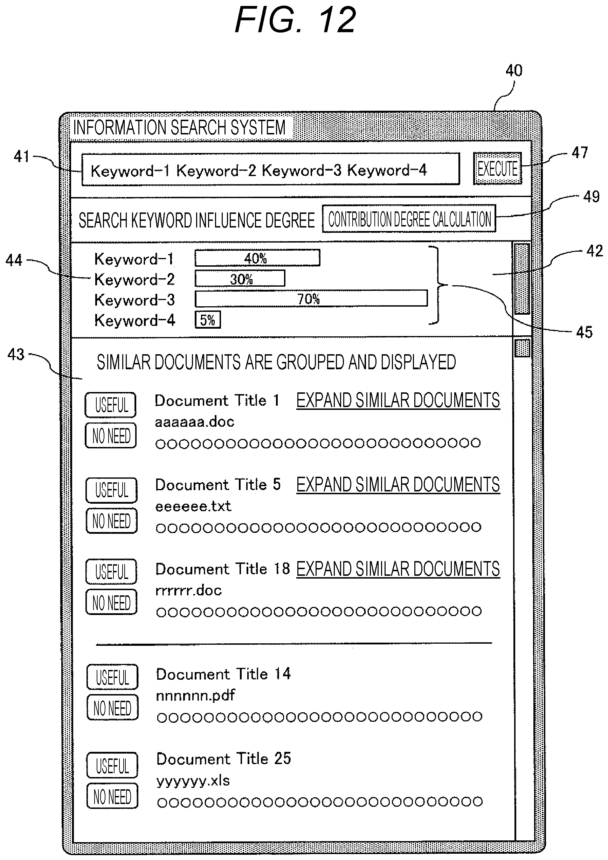

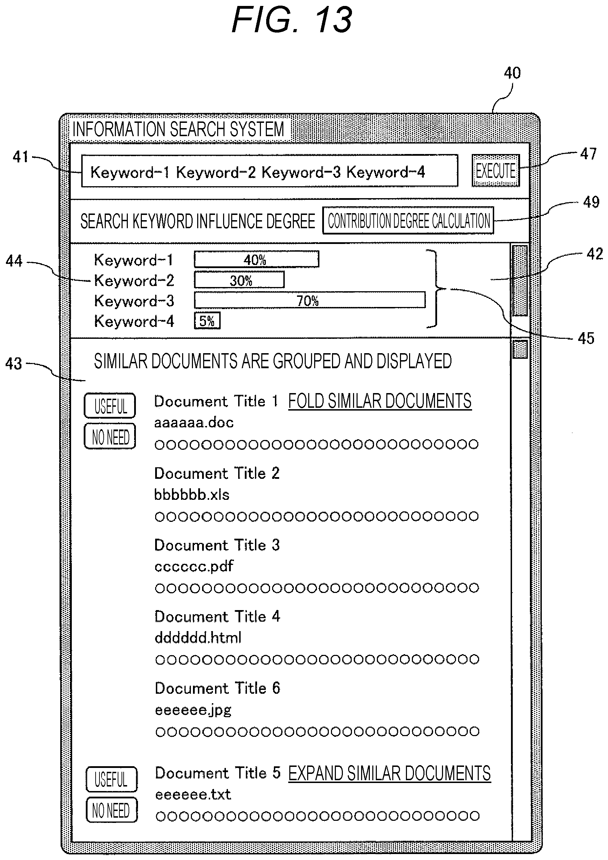

FIGS. 12 and 13 are display screen examples of the display unit 4. As illustrated in FIG. 12, in the third display region of the display screen 40, the documents included in the search result set ResultSetAll are classified into categories (grouped), and a representative document among the grouped documents is displayed. For example, "Document Title 1 aaaaaa.doc" belonging to one category which is grouped is displayed at the top, and the usefulness selection designation button 48 that enables the searcher (user) to select and designate "useful" or "no need" is disposed on the left side. "Expand similar documents" with an underbar is displayed on the right side of "Document Title 1". Similarly, "Document Title 5 eeeeee.txt" is displayed immediately therebelow, and "Document Title 18 rrrrrr.doc" is displayed immediately therebelow. The other display form is similar to the display form illustrated in FIG. 9 described in the second embodiment. As described above, in the present embodiment, a plurality of documents included in the search result set ResultSetAll are classified into a plurality of categories, and only one document representing each category is displayed in the third display region 43, and thus the searcher (user) can designate and input "useful" or "no need" in units of grouped categories through the usefulness selection designation button 48, reduce the time required for the usefulness evaluation input, and improve the workability.

In the screen display state illustrated in FIG. 12, if the searcher (user) moves the cursor to "Expand similar documents" with the underbar displayed on the right side of "Document Title 1 aaaaaa.doc" displayed at the top and clicks it using the input unit 3 such as a mouse, the display screen 40 transitions to a display form illustrated in FIG. 13. In other words, as illustrated in FIG. 13, four documents which are grouped into the same category as "Document Title 1 aaaaaa.doc", that is, "Document Title 2 bbbbbb.xls", "Document Title 3 cccccc.pdf", "Document Title 4 dddddd.html", and "Document Title 6 ffffff.jpg" are expanded and displayed in the third display region 43. Accordingly, the searcher (user) can easily check similar documents grouped into the same category as the document "Document Title 1 aaaaaa.doc".

As illustrated in FIG. 13, "Folding similar documents" with an underbar is displayed on the right side of "Document Title 1" after the expansion, and when the searcher (user) moves the cursor to "Folding similar documents" with the underbar and clicks it using the input unit 3 such as a mouse, the display form transitions to the display form illustrated in FIG. 12 again.

As described above, as compared with the configuration of the display screen of the second embodiment in which the usefulness can be designated and input individually for each of all the documents of the search result set, according to the present embodiment in which the usefulness can be designated and input for each category, an error is likely to be included in the contribution degree calculated by the search keyword contribution degree calculating unit 29, but it is possible to drastically reduce the number of usefulness evaluation inputs by the searcher (user), reduce the time required for the usefulness evaluation input, and improve the workability.

### Fourth embodiment

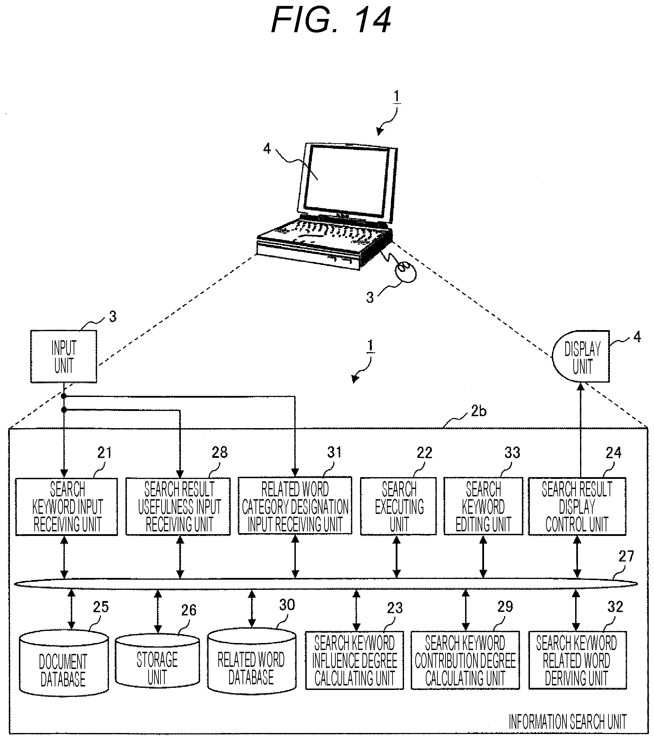

FIG. 14 is an external appearance diagram and a functional block diagram of an information search device of a fourth embodiment according to another embodiment of the present invention. The present embodiment differs from the second embodiment in that a related word database, a related word category designation input receiving unit, a search keyword related word deriving unit, and a search keyword editing unit are further installed in the information search unit constituting the information search device described in the second embodiment. Constituent elements similar to those in the second embodiment are denoted by the same reference numerals, and description overlapping with the second embodiment will be omitted below.

As illustrated in FIG. 14, an information search unit 2b constituting the information search device 1 of the present embodiment includes an input unit 3 such as a keyboard or a mouse, a display unit 4 such as an LCD or an organic EL display, and an information search unit 2a. The information search unit 2b includes a search keyword input receiving unit 21 that receives a search keyword input by a searcher (user) via the input unit 3, a document database 25 that stores documents such as document data or image data as described above, a search executing unit 22 that searches for documents stored in the document database 25, for example, through a known search engine on the basis of an input search keyword, a search keyword influence degree calculating unit 23 that obtains an influence degree of an input search keyword on a search result obtained by the search executing unit 22, a search result usefulness input receiving unit 28 that receives usefulness for the search result input by the searcher (user) through the input unit 3, a search keyword contribution degree calculating unit 29 that obtains a contribution degree of an input search keyword to a search result, a related word database 30, a related word designation input receiving unit 31 that receives a related word which is designated and input by the searcher (user) through the input unit 3, a search keyword related word deriving unit 32, a search keyword editing unit 33, a storage unit 26 that stores the influence degree obtained by the search keyword influence degree calculating unit 23 and the contribution degree obtained by the search keyword contribution degree calculating unit 29 in association with each keyword together with an influenced document, and a search result display control unit 24 that performs control such that at least a search result or the like is displayed on a display screen of the display unit 4. In the present embodiment, a configuration in which the document database 25 and the related word database 30 are installed in the information search unit 2b of the information search device 1 will be described as an example, but the present invention is not limited thereto. For example, a configuration in which the document database 25 and the related word database 30 are connected to the information search device 1 as an external storage device may be provided.

The search keyword input receiving unit 21, the search result usefulness input receiving unit 28, the related word designation input receiving unit 31, the search executing unit 22, the search keyword influence degree calculating unit 23, the search keyword contribution degree calculating unit 29, the search keyword related word deriving unit 32, the search keyword editing unit 33, the search result display control unit 24, the storage unit 26, the document database 25, and the related word database 30 are accessibly connected with one another via an internal bus 27. Here, for example, the search executing unit 22, the search keyword influence degree calculating unit 23, the search keyword contribution degree calculating unit 29, the search keyword related word deriving unit 32, the search keyword editing unit 33, and the search result display control unit 24 are implemented by a storage device such as a ROM that stores various kinds of programs (not illustrated), a RAM that temporarily stores data of a calculation process or a processing process, and a processor such as a CPU. The processor reads various kinds of programs stored in the ROM and executes a read program.

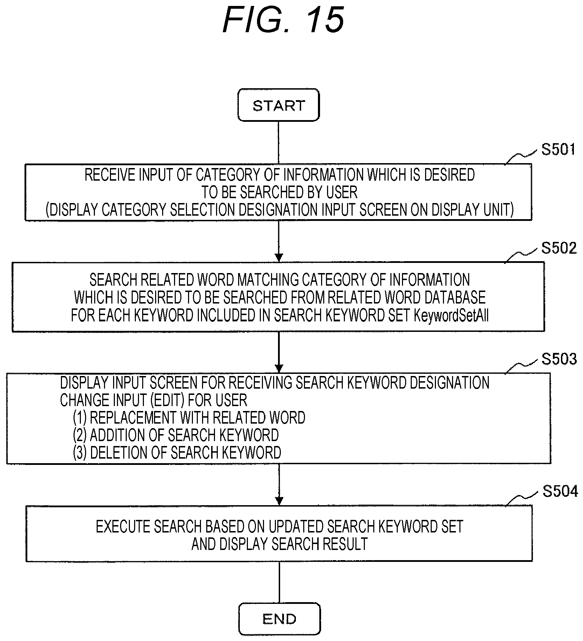

FIG. 15 is a process flow diagram for editing the search keyword through the information search unit 2b illustrated in FIG. 14. The calculation of the influence degree of the search keyword by the information search unit 2b is similar to steps S201 to S215 illustrated in FIG. 4 described in the first embodiment, and the calculation of the contribution degree of the search keyword by the information search unit 2b is similar to steps S301 to S314 illustrated in FIG. 8 described in the second embodiment, and thus description will be omitted.

As illustrated in FIG. 15, in step S501, if a category of information which is desired to be searched for is input by the searcher (user) through the input unit 3, the related word category designation input receiving unit 31 (FIG. 14) constituting the information search unit 2b receives the category input by the searcher (user). Here, a display screen displayed on the display unit 4 that enables the searcher (user) to input the category of the information which is desired to be searched for will be described later.

Then, in step S502, the search keyword related word deriving unit 32 accesses the related word database 30 via the internal bus 27, and searches for and extracts a related word matching the category of information which is desired from related word database 30 for each keyword included in the search keyword set KeywordSetAll.

In step S503, the search keyword editing unit 33 displays the related word obtained in step S502 on the display unit 4 through the search result display control unit 24. In other words, the search keyword editing unit 33 displays an input screen for receiving a designation change input (edit) of the search keyword on the display unit 4 for the searcher (user) . Here, the designation change input (edit) of the search keyword includes "replacement with a related word", "addition of a search keyword", and "deletion of a search keyword".

Then, in step S504, the search keyword editing unit 33 transfers the updated search keyword set KeywordSetAll to the search executing unit 22 via the internal bus 27. The search executing unit 22 accesses the document database 25 via the internal bus 27, re-executes the search on the basis of the updated search keyword set KeywordSetAll, and displays the search result on the display unit 4 through the search result display control unit 24.

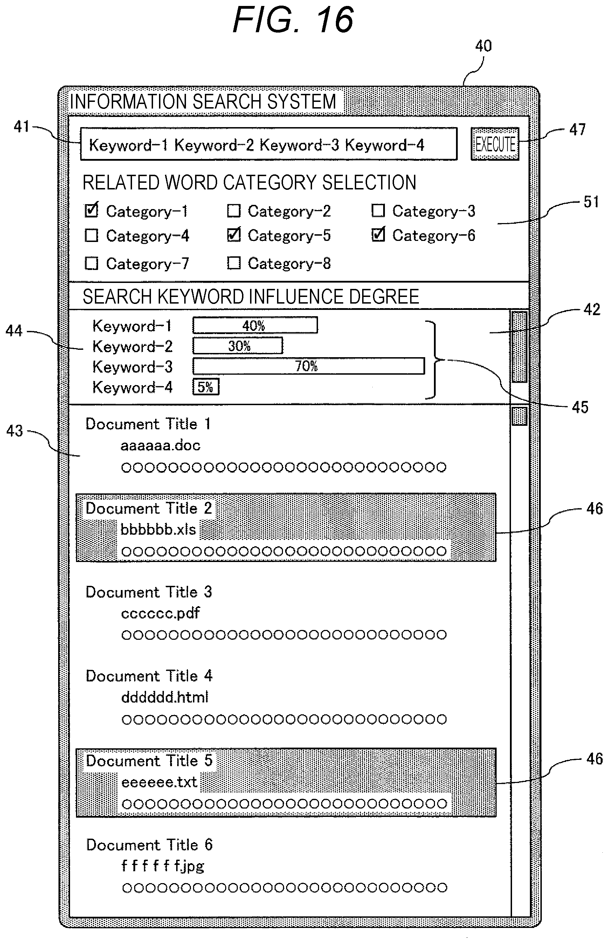

FIG. 16 illustrates a display screen example of the display unit 4 illustrated in FIG. 14, that is, an example of an input screen for selecting the related word category. As illustrated in FIG. 16, the display screen 40 further includes a fourth display region 51 serving as a category selection designation input field to which the category of information desired to be searched for by the searcher (user) is input in addition to the display screen configuration illustrated in FIG. 5 described in the first embodiment. The first display region 41, the second display region 42, and third display region 43 are similar to those in FIG. 5. In the example illustrated in FIG. 16, "Category-1", "Category-5", and "Category-6" are selected and designated in the fourth display region 51.

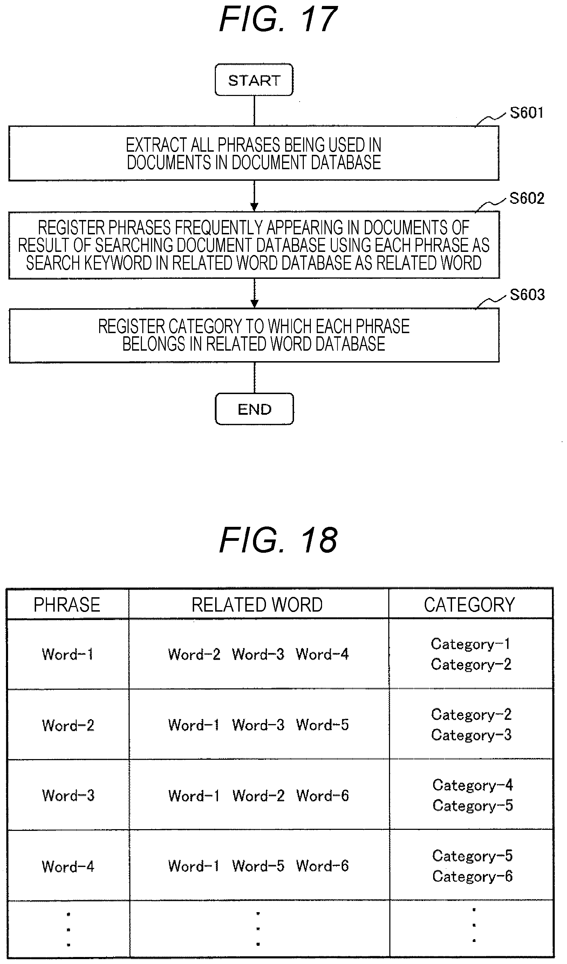

The related word database 30 will be described below with reference to FIGS. 17 and 18. FIG. 17 is a process flow diagram for constructing the related word database 30 illustrated in FIG. 14.

As illustrated in FIG. 17, in step S601, the search keyword related word deriving unit 32 accesses the document database 25 via the internal bus 27, and extracts all phrases used in the documents from the document (document) stored in the document database 25.

In step S602, the search keyword related word deriving unit 32 registers phrases frequently appearing in the documents obtained by searching the document database 25 using each phrase extracted in step S601 as the search keyword in the related word database 30 as a "related word".

In step S603, the search keyword related word deriving unit 32 further registers the category to which each phrase belongs in the related word database. Here, the category classification is performed by grouping a plurality of documents included in the search result set which is a result of searching using a certain phrase as the search keyword using Formula (1) described in the third embodiment. The category classification is not limited thereto, and the category may be registered manually.

FIG. 18 is an explanatory diagram of a data structure of the related word database 30 illustrated in FIG. 14. As illustrated in FIG. 18, the related word database 30 stores a "related word" and a "category" in association with each "phrase". For example, in a case in which the "phrase" is "Word-1", the "related word" is "Word-2, Word-3, Word-4", and the "category" is "Category-1 and Category-2". Further, in a case in which the phrase is "Word-2", the "related word" is "Word-1, Word-3, and Word-5", and the "category" is "Category-2 and Category-3". In a case in which the phrase is "Word-3", the "related word" is "Word-1, Word-2, and Word-6", and the "category" is "Category-4 and Category-5". In a case in which the phrase is "Word-4", the "related word" is "Word-1, Word-5, and Word-6", and the "category" is "Category-5 and Category-6".

For example, the searcher (user) is assumed to select and designate "Category-1", "Category-5", and "Category-6" as the related word category as illustrated in the fourth display region 51 in the display screen 40 as illustrated in FIG. 16. In this case, the search keyword related word deriving unit 32 accesses the related word database 30 via the internal bus 27. At this time, as illustrated in FIG. 18, in the related word database 30, the "related word" in which the "phrase" is "Word-1" is "Word-2, Word-3, and Word-4", and the "category" in which the "phrase" is "Word-2" is inspected again to be "Category-2 and Category-3". They do not match the categories "Category-1", "Category-5", and "Category-6" which are selected and designated by the searcher (user).

On the other hand, the "category" in which the "phrase" is "Word-3" is "Category-4 and Category-5", the category" in which the "phrase" is "Word-4" is "Category-5 and Category-6", and they match the categories "Category-1", "Category-5", and "Category-6" which are selected and designated by the searcher (user). In this regard, the search keyword related word deriving unit 32 selects "Word-3" and "Word-4" as the "related word" of "Word-1".

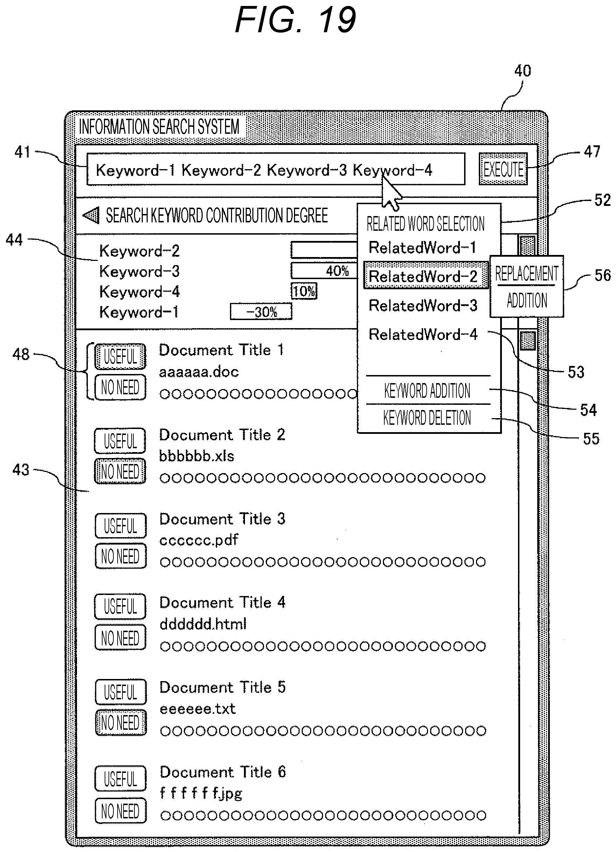

FIG. 19 is a display screen example of the display unit 4 illustrated in FIG. 14, that is, a screen example for editing the search keyword. As illustrated in FIG. 19, if the searcher (user) moves a mouse pointer (indicated by an outlined arrow) to the first display region 41 which is the search keyword input field through the input unit 3 such as a mouse and positions the mouse pointer on "Keyword-4", a search keyword edit menu 52 is popped up and displayed. This corresponds to the process of step S503 in FIG. 15 described above. In the example illustrated in FIG. 19, the search keyword edit menu 52 has edit items of related word selection 53, keyword addition 54, and keyword deletion 55, and a state in which the edit item of related word selection 53 among the edit items is selected, and "RelatedWord-2" is selected from among four displayed related words, that is, "RelatedWord-1", "RelatedWord-2", "RelatedWord-3", and "RelatedWord-4" is illustrated. In this state, if an instruction to "replace" is input through a "replace/add" button 56, "Related Word-2" is input to the first display region 41. In other words, "Keyword-4" in the first display region 41 is replaced with "RelatedWord-2" which is the related word.

According to the present embodiment, in addition to the effects of the first to third embodiments, since the searcher (user) selects and designates the category of the related word in advance, an unnecessary related word is not presented in the search keyword edit menu 52, and it is possible to reduce the noise included in the search result and to obtain useful information as the search result more quickly.

### Fifth embodiment

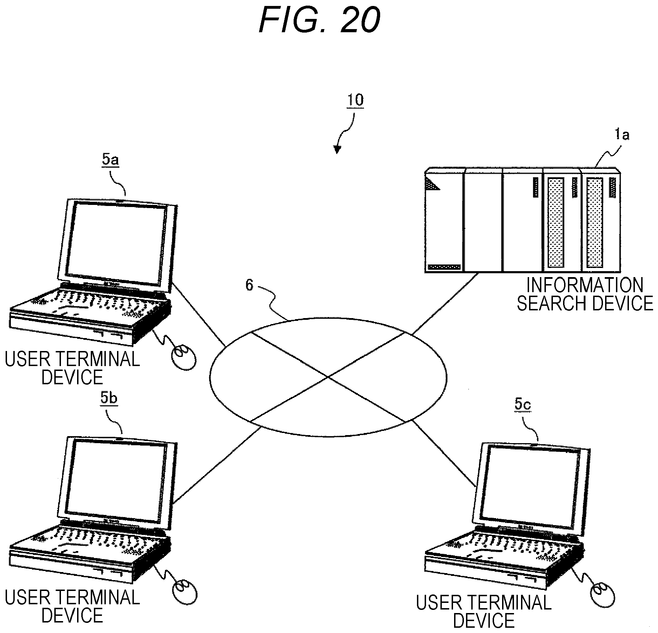

FIG. 20 is an overall schematic configuration diagram of an information search system of a fifth embodiment according to another embodiment of the present invention. As illustrated in FIG. 20, an information search system 10 includes an information search device 1a, a plurality of user terminal devices 5a to 5c, and a network 6 connecting these devices. For example, the information search device 1a is implemented by a server, and, for example, the user terminal devices 5a to 5c are implemented by a mobile computer, a desktop computer, a smartphone, a tablet, or the like.

A display control program for displaying only documents influenced by a search keyword which is selected and designated among a plurality of documents displayed in a region for displaying documents of a search result when a desired search keyword among a plurality of search keywords is selected and designated on an input screen for inputting the search keyword from the information search device 1a, a screen for displaying various kinds of documents extracted on the basis of the influence degree of the search keyword and the search keyword, and a display screen in a highlighted form, for example, a form distinguishable from other displayed documents is downloaded and installed in the user terminal devices 5a to 5c in advance via the network 6. Accordingly, the user terminal devices 5a to 5c are configured to be able to display an input of an arbitrary search keyword, the search result by the search keyword, and the display of the influence degree of the search keyword on their display unit.

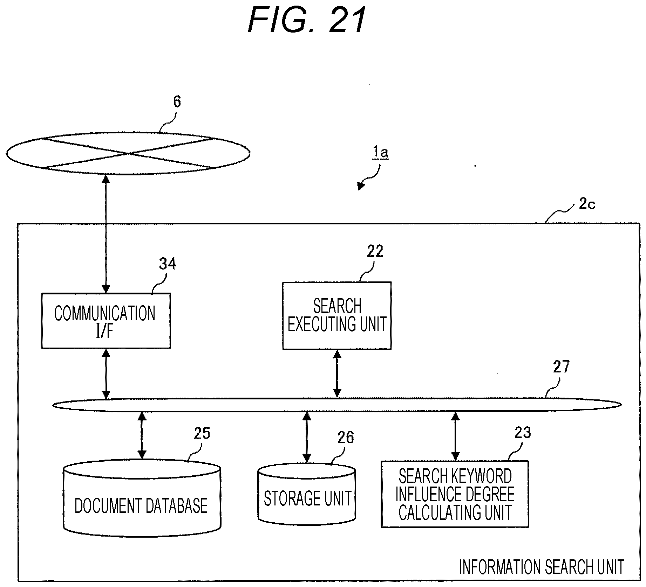

FIG. 21 is a functional block diagram of the information search device illustrated in FIG. 20. The same constituent elements as those of the first to fourth embodiments are denoted by the same reference numerals. As illustrated in FIG. 21, an information search unit 2c constituting the information search device 1a includes a communication I/F 34, a search executing unit 22, a search keyword influence degree calculating unit 23, a document database 25 that stores documents such as document data or image data, and a storage unit 26. In the present embodiment, the configuration in which the document database 25 is installed in the information search unit 2c of the information search device 1a has been described as an example, but the present invention is not limited thereto. For example, the document database 25 may be connected to the information search device 1a as an external storage device.

The communication I/F 34, the search executing unit 22, the search keyword influence degree calculating unit 23, the storage unit 26, and the document database 25 are accessibly connected to one another via the internal bus 27.

For example, if the user terminal device 5a among the user terminal devices 5a to 5c receives the search keyword set W [1], W[2], W[3],..., W[n] (the search keyword set) via the network 6 through the communication I/F 34, the communication I/F 34 transfers the received search keyword set KeywordSetAll to the search executing unit 22 via the internal bus 27.

As described in the first embodiment, the search executing unit 22 executes steps S201 to S206 illustrated in FIG. 4, and the search keyword influence degree calculating unit 23 executes steps S207 to S215 illustrated in FIG. 4. The search keyword influence degree calculating unit 23 calculates Sum[i]/ST as the influence degree Eᵢ of the search keyword W[i] and transmits Sum[i] /ST to the user terminal device 5a via the internal bus 27 and the communication I/F 34. The display contents illustrated in FIG. 5 described in the first embodiment are displayed on the display screen of the user terminal device 5a.

In the present embodiment, a configuration similar to the information search unit 2 illustrated in the first embodiment is employed as the configuration of the information search unit 2c, but instead of this, a configuration similar to that of the information search unit 2a illustrated in FIG. 6, that is, a configuration in which the information search unit 2c further includes the search keyword contribution degree calculating unit 29 in addition to the communication I/F 34, the search executing unit 22, the search keyword influence degree calculating unit 23, the document database 25 that stores documents such as document data or image data, and the storage unit 26 may be employed. Further, the information search unit 2c may further include the related word database 30, the search keyword related word deriving unit, and the search keyword editing unit 33 illustrated in FIG. 14 may be employed.

According to the present embodiment, a plurality of user terminal devices can share the information search device, and the effects of the first to fourth embodiments can be achieved.

The present invention is not limited to the above-described embodiments, but includes various modified examples. For example, the embodiments have been described in detail to facilitate understanding of the present invention and are not necessarily limited to those having all the configurations described above.

### Reference Signs List

1, 1a information search device
2, 2a, 2b, 2c information search unit
3, 3a input unit
4, 4a display unit
5a, 5b, 5c user terminal device
6 network
10 information search system
21 search keyword input receiving unit
22 search executing unit
23 search keyword influence degree calculating unit
24 search result display control unit
25 document database
26 storage unit
27 internal bus
28 search result usefulness input receiving unit
29 search keyword contribution degree calculating unit
30 related word database
31 related word category designation input receiving unit
32 search keyword related word deriving unit
33 search keyword editing unit
34 communication I/F
40 display screen
41 first display region (search keyword input field)
42 second display region
43 third display region (search result display region)
44 search keyword display region
45 search keyword influence degree display region
46 highlight display example
47 execution button
48 usefulness selection designation button
49 contribution degree calculation execution button
50 search keyword contribution degree display region
51 fourth display region (category selection designation input field)
52 search keyword edit menu
53 related word list
54 search keyword addition
55 search keyword deletion
56 replacement/addition button

## Claims

1. An information search device, comprising:
a keyword input receiving unit that receives an input of a plurality of search keywords;
a search executing unit that extracts a plurality of documents from a document database that stores a plurality of documents including document data and/or image data as a search result on the basis of the plurality of received search keywords;
a search keyword influence degree calculating unit that obtains an influence degree of the presence or absence of the received search keywords on the search result for each search keyword; and
a display unit that displays the influence degree of each search keyword on a screen together with the search result.

2. The information search device according to claim 1,
wherein the search executing unit extracts a plurality of documents as the search result on the basis of a plurality of other search keywords from which a specific search keyword among the plurality of search keywords is excluded, and
the search keyword influence degree calculating unit obtains the influence degree of the presence or absence of the specific search keyword on the search result on the basis of a difference between a plurality of documents included in the search result based on the plurality of other search keywords from which the specific search keyword is excluded and a plurality of documents included in the search result based on the plurality of received search keywords.

3. The information search device according to claim 2, further comprising:
a search result usefulness input receiving unit that receives an input of usefulness for a plurality of documents included in the search result displayed on the display unit; and
a search keyword contribution degree calculating unit that sets a score to be assigned to each of the received documents on the basis of the usefulness for each of the documents and obtains a contribution degree of each search keyword to the search result on the basis of the score,
wherein the contribution degree of each search keyword to the search result is displayed on a screen of the display unit together with the search result and the influence degree.

4. The information search device according to claim 3,
wherein the search executing unit performs category classification on the plurality of documents included in the search result on the basis of a similarity degree between the respective documents, and
the search result usefulness input receiving unit receives an input of usefulness for each of the categories displayed on the display unit.

5. The information search device according to claim 4,
wherein the display screen of the display unit includes
a first display region to which the plurality of search keywords are input,
a second display region in which the influence degree or the contribution degree is displayed for each search keyword, and
a third display region in which the plurality of documents included in the search result are displayed.

6. The information search device according to claim 5, further comprising:
a related word database that stores phrases frequently appearing in the documents of the search result obtained by searching the document database in association with a category as the related word for each search keyword in advance;
a related word category input receiving unit that receives a category of information which is desired to be searched for;
a search keyword related word deriving unit that accesses the related word database and extracts related words matching the category of the information which is desired to be searched for; and
a search keyword editing unit that displays the related word extracted by the search keyword related word deriving unit on the display unit and edits the search keyword displayed in the first display region in accordance with a designation input for the displayed related word.

7. An information search method, comprising:
a keyword input reception process of receiving an input of a plurality of search keywords;
a search process of extracting a plurality of documents from a document database that stores a plurality of documents including document data and/or image data as a search result on the basis of the plurality of received search keywords;
a search keyword influence degree calculation process of obtaining an influence degree of the presence or absence of the received search keywords on the search result for each search keyword; and
a display process of displaying the influence degree of each search keyword on a screen of a display unit together with the search result.

8. The information search method according to claim 7,
wherein the search process includes extracting a plurality of documents as the search result on the basis of a plurality of other search keywords from which a specific search keyword among the plurality of search keywords is excluded, and
the search keyword influence degree calculation process including obtaining the influence degree of the presence or absence of the specific search keyword on the search result on the basis of a difference between a plurality of documents included in the search result based on the plurality of other search keywords from which the specific search keyword is excluded and a plurality of documents included in the search result based on the plurality of received search keywords.

9. The information search method according to claim 8, further comprising:
a search result usefulness input reception process of receiving an input of usefulness for a plurality of documents included in the search result displayed on the display unit; and
a search keyword contribution degree calculation process of setting a score to be assigned to each of the received documents on the basis of the usefulness for each of the documents and obtaining a contribution degree of each search keyword to the search result on the basis of the score,
wherein the display process includes displaying the contribution degree of each search keyword to the search result on a screen of the display unit together with the search result and the influence degree.

10. The information search method according to claim 9,
wherein the search process includes performing category classification on the plurality of documents included in the search result on the basis of a similarity degree between the respective documents, and
the search result usefulness input reception process includes receiving an input of usefulness for each of the categories displayed on the display unit.

11. The information search method according to claim 10,
wherein the display screen of the display unit includes a first display region, a second display region, and a third display region, and
the displaying step includes displaying a plurality of input search keywords in the first display region, displaying the influence degree or the contribution degree in the second display region for each search keyword, and displaying the plurality of document included in the search result in the third display region.

12. The information search method according to claim 11, further comprising:
a related word category input reception process of receiving a category of information which is desired to be searched for;
a search keyword related word derivation process of accessing a related word database that stores phrases frequently appearing in the documents of the search result obtained by searching the document database in association with a category as the related word for each search keyword in advance and extracting related words matching the category of the information which is desired to be searched for; and
a search keyword edit process of displaying the related word extracted in the search keyword related word derivation process on the display unit and editing the search keyword displayed in the first display region in accordance with a designation input for the displayed related word.

13. An information search system, comprising:
an information search device that is connected with a plurality of user terminal devices via a network,
wherein the information search device includes
a keyword input receiving unit that receives a plurality of search keywords input from the user terminal device via the network,
a search executing unit that extracts a plurality of documents from a document database that stores a plurality of documents including document data and/or image data as a search result on the basis of the plurality of received search keywords, and
a search keyword influence degree calculating unit that obtains an influence degree of the presence or absence of the received search keywords on the search result for each search keyword, and
the influence degree of each search keyword is transmitted to the user terminal device via the network together with the search result.

14. The information search system according to claim 13,
wherein the search executing unit extracts a plurality of documents as the search result on the basis of a plurality of other search keywords from which a specific search keyword among the plurality of search keywords is excluded, and
the search keyword influence degree calculating unit obtains the influence degree of the presence or absence of the specific search keyword on the search result on the basis of a difference between a plurality of documents included in the search result based on the plurality of other search keywords from which the specific search keyword is excluded and a plurality of documents included in the search result based on the plurality of received search keywords.

15. The information search system according to claim 14,
wherein the information search device includes
a search result usefulness input receiving unit that receives an input of usefulness for a plurality of documents included in a search result displayed on a display unit of the user terminal device via the network, and
a search keyword contribution degree calculating unit that sets a score to be assigned to each of the received documents on the basis of the usefulness for each of the documents and obtains a contribution degree of each search keyword to the search result on the basis of the score, and
the contribution degree of each search keyword to the search result is transmitted to the user terminal device via the network together with the search result and the influence degree.
